# EUROPEAN PATENT SPECIFICATION

(11) **EP 2 848 905 B1**
(45) Date of publication and mention of the grant of the patent: **26.04.2017**
(21) Application number: 13837463.2
(22) Date of filing: 17.09.2013
(51) Int. Cl.: G01D 5/245, G01L 3/14, A61G 5/04, B62J 99/00

(54) **RELATIVE-ROTATION-ANGLE-DISPLACEMENT DETECTOR, TORQUE CONTROLLER AND TORQUE DETECTOR IN WHICH SAID DETECTOR IS USED, AND VEHICLE PROVIDED WITH SAID CONTROLLER**
DETEKTOR MIT RELATIVER ROTATIONSWINKELVERSCHIEBUNG, DREHMOMENTSTEUERUNG UND DREHMOMENTSENSOR ZUR VERWENDUNG DES BESAGTEN DETEKTORS DARIN UND MIT BESAGTER STEUERUNG AUSGESTATTETES FAHRZEUG
DÉTECTEUR DE DÉCALAGE D'ANGLE DE ROTATION RELATIVE, DISPOSITIF DE COMMANDE DE COUPLE ET DÉTECTEUR DE COUPLE UTILISANT LEDIT DÉTECTEUR, AINSI QUE VÉHICULE ÉQUIPÉ DU DISPOSITIF DE COMMANDE

(30) Priority: 14.09.2012 JP 2012202935
(43) Date of publication of application: 18.03.2015
(73) Proprietor: Yamaha Hatsudoki Kabushiki Kaisha, Iwata-shi, Shizuoka 438-8501 (JP)
(72) Inventor: HINO, Haruyoshi, Iwata-shi Shizuoka 438-8501 (JP); NAKAMURA, Kazuto, Iwata-shi Shizuoka 438-8501 (JP)
(74) Representative: Grünecker Patent- und Rechtsanwälte PartG mbB
(86) International application number: PCT/JP2013/074980
(87) International publication number: WO 2014/042267

(56) References cited:
- EP-A2- 0 891 923
- WO-A1-2007/139021
- DE-A1-102012 110 617
- JP-A- H1 130 555
- JP-A- 2004 309 463
- JP-A- 2008 189 164
- JP-A- 2011 043 398
- JP-A- 2011 043 398
- US-A1- 2004 194 560

## Description

### Technical Field

The present invention relates to a relative rotational angular displacement detection device; a torque detection device and a torque control device including the relative rotational angular displacement detection device; and a power assist wheelchair, a power assist straddle-type vehicle, and a power steering device including the torque control device.

### Background Art

For example, in a conventional manual wheelchair, a pair of hand rims are arranged outside of a pair of right and left rear wheels, respectively. The pair of hand rims are provided to the rear wheels with the axis of rotation of the hand rims coaxial with the axis of an axle. When a user rotates the hand rims, the rotational force is transmitted to the rear wheels so that the manual wheelchair travels. Recently, in the wheelchair, for the purpose of reducing the burden on a user in moving the hand rim, a power assist system has been developed, in which the most appropriate assisting force corresponding to the manual force for moving the hand rim is transmitted to a driving wheel by an electric motor.

In this system, a force pedaling the hand rim of the wheelchair and a force of the motor outputted in accordance with the pedaling force are combined to rotate the wheels, which enables easy moving of the wheelchair. This kind of power assist system is applicable not only to a wheelchair but also to a power assist bicycle, a power steering device of an automobile, and the like.

This kind of power assist system is provided with a detection device for sensing a torque by detecting a relative rotational angular displacement of a pair of rotatable members that are rotatable relative to each other and that are arranged with their axes of rotation coaxial with each other. As a device for detecting such a relative rotational angular displacement or a relative rotational torque, the following device is disclosed (for example, see Patent Literature 1). The device includes a pair of first and second shaft members arranged with their axes of rotation coaxial with each other, a cylindrical magnet fixed to the first shaft member, a pair of yoke rings fixed to the second shaft member, a pair of magnetic flux collector rings each arranged so as to surround each yoke ring and each having a magnetic flux collecting projection, and a magnetic sensor arranged between the magnetic flux collecting projections and configured to detect a change in magnetic fluxes occurring in the yoke rings in accordance with a relative angular displacement of the first and second shaft members.

In the relative rotational angular displacement detection device having the above-described configuration, the first shaft member is provided with the cylindrical magnet that is coaxial with the first shaft member. The cylindrical magnet is configured to rotate together with the first shaft member. The cylindrical magnet includes magnetic poles (N-poles and S-poles) that are magnetized in a radial direction of an axis of rotation and arranged in the radial direction of the axis of rotation. The second shaft member is provided with the pair of yoke rings configured to rotate together with the second shaft member. Each yoke ring includes magnetic pole claws, the number of which is equal to the number of pairs of the N-poles and S-poles. The magnetic pole claws are arranged outside of the cylindrical magnet such that each magnetic pole claw faces each magnetic pole of the cylindrical magnet with respect to the radial direction of the axis of rotation. The pair of yoke rings are arranged such that the magnetic pole claws of one of the yoke rings and the magnetic pole claws of the other of the yoke rings are opposed to each other with respect to an axial direction of the axis of rotation and arranged alternately with respect to a circumferential direction. The pair of magnetic flux collector rings each for collecting magnetic fluxes generated in each yoke ring are arranged outside of the corresponding yoke rings with respect to the radial direction of the axis of rotation. The two magnetic flux collector rings are arranged so as to surround the corresponding yoke rings. When the first shaft member and the second shaft member are rotated relative to each other, the relative positions of the magnetic pole claws of each yoke ring relative to the magnetic poles of the cylindrical magnet are changed. This causes a change in magnetic fluxes between the magnetic flux collector rings. The change in magnetic fluxes is detected by the magnetic sensor.

### Citation List

### Patent Literature

PTL 1: Japanese Patent Application Laid-Open No. 2008-249366

In the aforementioned detection device, for enabling a change in the magnetic flux density to be detected with a high degree of accuracy, it is necessary that the pair of yoke rings are arranged close to each other such that the triangular-shaped magnetic pole claws provided in one and the other rings are positioned alternately with respect to the circumferential direction and such that the interval between any adjacent ones of the magnetic pole claws is kept constant with respect to both the circumferential direction and the axial direction. Additionally, it is also necessary that the magnetic pole claws are arranged such that the interval between each magnetic pole claw and the cylindrical magnet is kept constant with respect to the radial direction. This requires a high dimensional accuracy in processing of each yoke ring with respect to the circumferential direction, the axial direction, and the radial direction, and also requires a high accuracy of assembling of the yoke rings and the cylindrical magnet. This is why there has been a problem that increasing the accuracy of detection involves an increase in the cost for manufacturing and assembling the detection device.

The present invention has been made in view of the conventional problem described above. An object of the present invention is to provide: a relative rotational angular displacement detection device having a simple structure that can be manufactured and assembled easily and able to detect a relative rotational angular displacement with a high degree of accuracy; a torque detection device and a torque control device including the relative rotational angular displacement detection device; and a power assist wheelchair, a power assist straddle-type vehicle, or a power steering device including the torque control device.

Prior art document JP2011-043398 A provide a rotational torque detection device mainly used for detection of a rotational torque of a vehicle steering or the like, capable of detecting the rotational torque inexpensively and surely. Said device comprises an approximately cylindrical magnet fixed to a first rotator is formed in the state where different magnetic poles are arrayed adjacently, and a groove part is provided between the magnetic poles, and thereby a volume of the magnet is reduced as much as a portion of the groove part formed between the magnetic poles, and a using amount can be reduced. Consequently, this rotational torque detection device capable of detecting the rotational torque surely with an inexpensive constitution can be acquired.

Prior art document US2004/194560 A1 discloses a device for determining a torque exercised on a shaft, wherein the shaft comprises a first shaft section and a second shaft section, wherein the two shaft sections can be rotated relative to another, with a multi-pole magnetic ring which surrounds the first shaft section and is connected thereto, and a stator holder which is mounted to the second shaft section, wherein two stator elements are mounted to a stator holder and each stator element comprises fingers projecting in an axial or radial direction which are distributed uniformly at least over part of the periphery with gaps between them, wherein the fingers of each stator element are interconnected via a magnetic flux ring, wherein the magnetic flux rings have a mutual separation and a magnetic field sensor is disposed between the magnetic flux rings,; wherein at least one magnetic flux concentrator is associated with the magnetic field sensor, wherein the magnetic flux concentrator surrounds the magnetic flux rings.

According to the present invention said object is solved by relative rotational angular displacement detection device having the features of independent claim 1. Preferred embodiments are laid down in the dependent claims. It is provided:
(1) A relative rotational angular displacement detection device, including:
   a pair of rotatable members rotatable relative to each other about an axis of rotation in a circumferential direction;
   a permanent magnet attached to one of the pair of rotatable members and including magnetic poles magnetized in an axial direction of the axis of rotation, the magnetic poles arranged so as to alternate in polarity in the circumferential direction, the magnetic poles each having a circumferential width;
   a magnetic flux guiding ring including a plurality of protruding portions and an annular ring body, the plurality of protruding portions each having a circumferential width, at least one of the circumferential widths of the protruding portions being smaller than at least one of the circumferential widths of the magnetic poles, the annular ring body attached to the other of the pair of rotatable members and arranged coaxially with the axis of rotation, the annular ring body magnetized with the strength of magnetization changing depending on positions of the protruding portions relative to positions of the magnetic poles; and
   a magnetic detection unit configured to detect magnetic fluxes of the ring body of the magnetic flux guiding ring.

   In the configuration of (1), the permanent magnet is attached to one of the pair of rotatable members rotatable relative to each other in the circumferential direction of the axis of rotation, in such a manner that the magnetic poles magnetized in the axial direction of the axis of rotation alternate in polarity in the circumferential direction of the axis of rotation. Each of the plurality of protruding portions of the magnetic flux guiding ring has a circumferential width, and the circumferential width of at least one protruding portion is smaller than the circumferential width of at least one magnetic pole. In a state where the permanent magnet and the protruding portions are arranged in this manner, the annular ring body has the strength of magnetization changing depending on the positions of the protruding portion relative to the positions of the magnetic poles. Thus, the shape of the protruding portions of the magnetic flux guiding ring can be simple. This enables the protruding portions of the magnetic flux guiding ring to be formed with a high degree of accuracy. The magnetic poles of the permanent magnet and the plurality of protruding portions have circumferential widths. The circumferential width of at least one of the plurality of protruding portions is smaller than the circumferential width of the magnetic pole. The strength of magnetization of the annular ring body changes depending on a positional relation between the magnetic poles and the protruding portions (that is, the positions of the protruding portions relative to the positions of the magnetic poles). Setting the positional relation between the magnetic poles and the protruding portions is relatively easy. Therefore, assembling of members such as the magnetic flux guiding ring and the permanent magnet is easy. Accordingly, the configuration of (1) achieves a simple structure that can be manufactured and assembled easily and that enables a relative rotational angular displacement of a pair of rotatable members rotatable relative to each other to be detected with a high degree of accuracy.
   The present invention can also adopt the following configurations, for example.
(2) The relative rotational angular displacement detection device according to (1), wherein
   the ring body of the magnetic flux guiding ring includes an annular plane portion that extends in a direction intersecting with a direction of magnetization of the permanent magnet,
   the magnetic detection unit is configured to detect magnetic fluxes of the annular plane portion of the ring body.
   In the configuration of (2), the magnetic detection unit detects magnetic fluxes of the annular plane portion that extends in the direction intersecting with the direction of magnetization of the permanent magnet. The annular plane portion extends in the direction intersecting with the direction of magnetization of the permanent magnet (the axial direction of the axis of rotation). Therefore, even when the position of the magnetic detection unit relative to the annular plane portion is shifted in a direction (for example, the radial direction of the axis of rotation) intersecting with the direction of magnetization of the permanent magnet due to, for example, an error occurring in a process of manufacturing or assembling the members, less influence is given to the accuracy of detection of the magnetic detection unit. In other words, assembling of each member can be performed more easily. Accordingly, the configuration of (2) is able to detect a relative rotational angular displacement of a pair of rotatable members rotatable relative to each other with a higher degree of accuracy while achieving easier manufacturing and assembling.
(3) The relative rotational angular displacement detection device according to (2), wherein
   the magnetic detection unit includes a magnetic sensor for detecting magnetic fluxes,
   the magnetic sensor is a sensor configured to detect, among magnetic fluxes of the annular plane portion, magnetic fluxes oriented in the direction of magnetization of the permanent magnet.
   In the configuration of (3), the magnetic sensor detects the magnetic fluxes oriented in the direction of magnetization of the permanent magnet among the magnetic fluxes of the annular plane portion. In the magnetic fluxes of the annular plane portion, the magnetic fluxes oriented in the direction of magnetization of the permanent magnet are stronger than magnetic fluxes oriented in other directions. Since the magnetic sensor is able to detect relatively strong magnetic fluxes, noise or the like is less influential. Accordingly, a relative rotational angular displacement of a pair of rotatable members rotatable relative to each other can be detected with a still higher degree of accuracy.
(4) The relative rotational angular displacement detection device according to (3), wherein
   at least one of the ring body of the magnetic flux guiding ring and the magnetic sensor is arranged at a position different from the position of the protruding portion of the magnetic flux guiding ring with respect to the axial direction of the axis of rotation.
   In the configuration of (4), the position of at least one of the ring body and the magnetic sensor is different from the position of the protruding portion with respect to the axial direction. This achieves a more simple structure and easier assembling while ensuring an accuracy of detection.
(5) The relative rotational angular displacement detection device according to (4), wherein
   the magnetic detection unit includes an intermediate yoke having a first plane portion,
   the first plane portion is arranged between the magnetic sensor and the ring body, and arranged so as to face the annular plane portion of the ring body with a gap therebetween with respect to the direction of magnetization of the permanent magnet.
   In the configuration of (5), the intermediate yoke is provided. Accordingly, magnetic fluxes of the magnetic flux guiding ring can be collected, and the amplitude of magnetic fluxes that the ring body has directly received from the permanent magnet irrespective of the phase of the protruding portion can be averaged. This can further improve the accuracy of detection. Additionally, for example, the ring body (annular plane portion) can be arranged more outward with respect to the radial direction of the axis of rotation. This allows an increase in the inner diameter of the ring body, and a decrease in the size of the permanent magnet and the size of the distal end of each protruding portion. Thus, installation in the space is easy.
(6) The relative rotational angular displacement detection device according to (5), wherein
   the surface area of the first plane portion of the intermediate yoke is smaller than the surface area of the annular plane portion of the ring body.
   The configuration of (6) is able to detect a relative rotational angular displacement with a higher degree of accuracy while achieving more simple manufacturing and assembling.
(7) The relative rotational angular displacement detection device according to (5) or (6), wherein
   at least any one of the ring body, the intermediate yoke, and the magnetic sensor is arranged at a position different from the position of the protruding portion with respect to a radial direction of the axis of rotation.
   The configuration of (7), in which at least any one of the ring body, the intermediate yoke, and the magnetic sensor is arranged at a position different from the position of the protruding portion with respect to the radial direction of the axis of rotation, achieves a further simple structure and easier assembling while ensuring an accuracy of detection.
(8) The relative rotational angular displacement detection device according to any one of (1) to (7), wherein
   the magnetic poles form an N-pole group and an S-pole group,
   the magnetic flux guiding ring has a first state in which the strength of magnetization is relatively low and a second state in which the strength of magnetization is relatively high,
   in the first state, the protruding portions are positioned relative to the magnetic poles such that the difference between the strength of magnetization of the magnetic flux guiding ring magnetized by the N-pole group and the strength of magnetization of the magnetic flux guiding ring magnetized by the S-pole group is small,
   in the second state, the protruding portions are positioned relative to the magnetic poles such that the difference between the strength of magnetization of the magnetic flux guiding ring magnetized by the N-pole group and the strength of magnetization of the magnetic flux guiding ring magnetized by the S-pole group is large.
   The configuration of (8) can further improve the accuracy of detection of the relative position because of the difference between the strength of magnetization of the magnetic flux guiding ring in the first state and the strength of magnetization of the magnetic flux guiding ring in the second state.
(9) The relative rotational angular displacement detection device according to (8), wherein
   in the first state, the protruding portions are positioned relative to the magnetic poles such that the magnetic flux guiding ring is magnetized substantially equally by the N-pole group and the S-pole group,
   in the second state, the protruding portions are positioned relative to the magnetic poles such that the magnetic flux guiding ring is magnetized by substantially only one of the N-pole group and the S-pole group.
   In the configuration of (9), the difference between the strength of magnetization of the magnetic flux guiding ring in the first state and the strength of magnetization of the magnetic flux guiding ring in the second state is clearer. Accordingly, the accuracy of detection of the relative position can be further improved.
(10) The relative rotational angular displacement detection device according to any one of (1) to (9), wherein
   the circumferential width of each of the protruding portions is smaller than the circumferential width of each of the magnetic poles.
   In the configuration of (10), a change in the strength of magnetization of the magnetic flux guiding ring due to the positional relation between the protruding portions and the magnetic poles is clearer. Accordingly, the accuracy of detection of the relative position can be further improved.
(11) A torque detection device including:
   the relative rotational angular displacement detection device according to any one of (1) to (10); and
   an elastic member arranged between the pair of rotatable members, the elastic member configured to constantly apply a biasing force in a relative rotation direction to the pair of rotatable members, wherein
   the pair of rotatable members are provided with a relative rotation restriction part,
   the relative rotation restriction part is configured to prevent rotation of the rotatable members relative to each other after either one of the pair of rotatable members is rotated relative to the other of the rotatable members through a predetermined rotational angle against the biasing force of the elastic member.
(12) A torque control device including:
   the relative rotational angular displacement detection device according to any one of (1) to (10);
   a rotary driving member connected to either one of the pair of rotatable members, the rotary driving member configured such that a user gives a rotational force thereto;
   a power source configured to give a rotational force to the other of the rotatable members; and
   a control unit configured to, when the one rotatable member is rotated relative to the other rotatable member through a predetermined rotational angle, control the rotational force that the power source gives to the other rotatable member depending on an output of the magnetic detection unit.
(13) A power assist wheelchair including the torque control device according to (12).
(14) A power assist straddle-type vehicle including the torque control device according to claim 12.
(15) A power steering device including the torque control device according to claim 12.

### Advantageous Effects of Invention

The present invention can provide a relative rotational angular displacement detection device having a simple structure that can be manufactured and assembled easily and able to detect a relative rotational angular displacement with a high degree of accuracy.

### Brief Description of Drawings

[FIG. 1] An explanatory diagram showing a schematic structure of a relative rotational angular displacement detection device according to an embodiment of the present invention.
[FIG. 2] An enlarged cross-sectional view of the area "A" enclosed by the dash line in FIG. 1.
[FIG. 3A] A diagram showing a schematic structure of a principal part of the device as seen in the axial direction of the axis of rotation of the device in a state where the relative rotational angular displacement is zero degree.
[FIG. 3B] A diagram showing a schematic structure of the principal part of the device as seen in the axial direction of the axis of rotation in a state where the relative rotational angular displacement is ten degrees.
[FIG. 4A] An explanatory diagram showing a positional relation between magnetic poles of a permanent magnet and protruding portions of a magnetic flux guiding ring in the state shown in FIG. 3A.
[FIG. 4B] An explanatory diagram showing a positional relation between the magnetic poles of the permanent magnet and the protruding portions of the magnetic flux guiding ring in the state shown in FIG. 3B.
[FIG. 5A] An explanatory diagram showing a state of magnetic flux distribution in the magnetic poles of the permanent magnet and the magnetic flux guiding ring in the state shown in FIG. 3A.
[FIG. 5B] An explanatory diagram showing a state of magnetic flux distribution in the permanent magnet, the magnetic flux guiding ring, an intermediate yoke, a magnetic sensor, and a back yoke in the state shown in FIG. 3A.
[FIG. 5C] An explanatory diagram showing a state of magnetic flux distribution in the permanent magnet, the magnetic flux guiding ring, the intermediate yoke, the magnetic sensor, the back yoke, and the vicinity thereof in the state shown in FIG. 3A.
[FIG. 6A] An explanatory diagram showing a state of magnetic flux distribution in the magnetic poles of the permanent magnet and the magnetic flux guiding ring under in the state shown in FIG. 3B.
[FIG. 6B] An explanatory diagram showing a state of magnetic flux distribution in the permanent magnet, the magnetic flux guiding ring, the intermediate yoke, the magnetic sensor, and the back yoke in the state shown in FIG. 3B.
[FIG. 6C] An explanatory diagram showing a state of magnetic flux distribution in the permanent magnet, the magnetic flux guiding ring, the intermediate yoke, the magnetic sensor, the back yoke, and the vicinity thereof in the state shown in FIG. 3B.
[FIG. 7] A schematic explanatory diagram showing an application of the relative rotational angular displacement detection device according to the present invention to a power assist system of a power assist bicycle.
[FIG. 8] A schematic explanatory diagram showing an application of the relative rotational angular displacement detection device according to the present invention to a power assist system of a power assist wheelchair.
[FIG. 9] A schematic explanatory diagram showing an application of the relative rotational angular displacement detection device according to the present invention to a power assist system of a power steering device of an automobile.

### Description of Embodiments

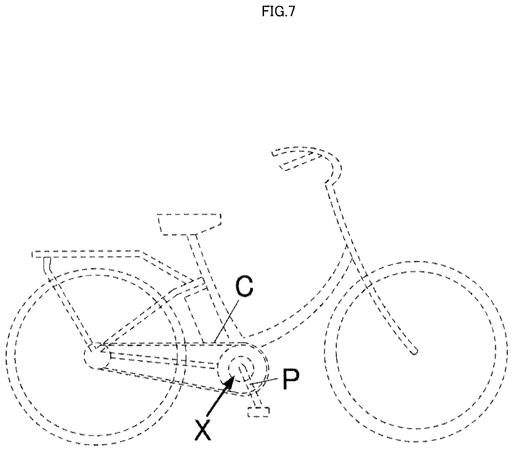

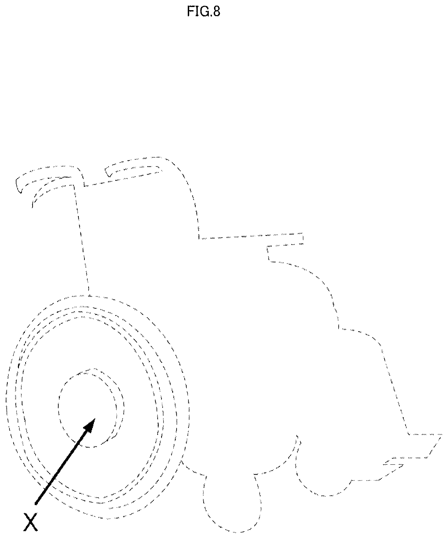

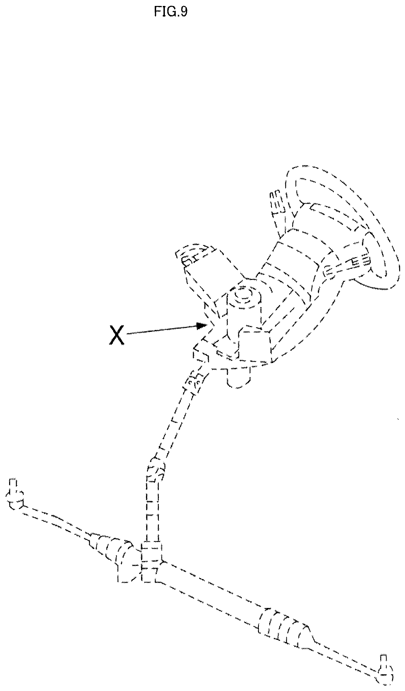

In the following, a relative rotational angular displacement detection device according to the present invention will be described based on an exemplary embodiment in which the relative rotational angular displacement detection device is applied to a power assist system for a power assist bicycle (see FIG. 7). It should be noted that applications of the relative rotational angular displacement detection device according to the present invention are not limited to a power assist system for a power assist bicycle. The relative rotational angular displacement detection device according to the present invention detects a relative rotational angular displacement of a pair of rotatable members that are arranged with their axes of rotation coaxial with each other. The relative rotational angular displacement detection device according to the present invention is adoptable for a variety of devices and mechanisms configured to detect a relative rotational angular displacement of a pair of rotatable members that are rotatable relative to each other. The present invention is also preferably adoptable for, for example, a power assist system of a power assist wheelchair (see FIG. 8), a power steering device of an automobile (see FIG. 9), and the like.

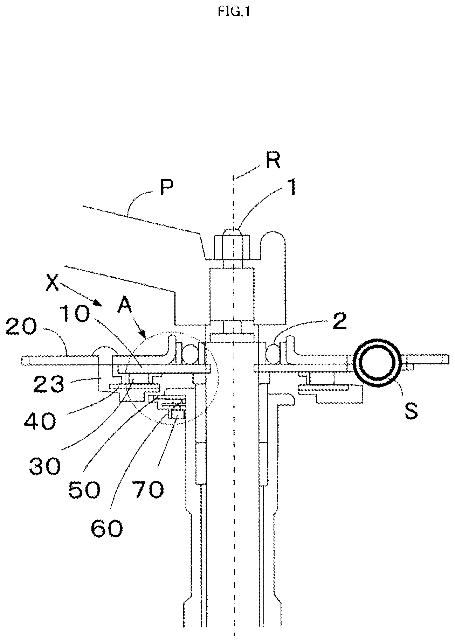

For example, referring to FIG. 1, in the relative rotational angular displacement detection device X of this embodiment, a pedal P is attached to one end portion of a shaft part 1. A lever member 10 serving as a first rotatable member and a sprocket 20 serving as a second rotatable member are provided to the one end portion of the shaft part 1. The lever member 10 and the sprocket 20 are arranged coaxially with the shaft part 1, and in other words, arranged coaxially with an axis R of rotation. That is, the shaft part 1 has the axis R of rotation. The axis R of rotation also serves as axes of rotation of the pair of rotatable members (the lever member 10 and the sprocket 20). As shown in FIG. 1, the lever member 10 and the sprocket 20 are arranged close to each other in an adjacent manner so as to be rotationally movable relative to each other in a circumferential direction of the axis R of rotation. The circumferential direction of the axis R of rotation may represent the rotation direction of the lever member 10 and the sprocket 20. The circumferential direction of the axis R of rotation may be identical to the rotation direction of the lever member 10 and the sprocket 20.

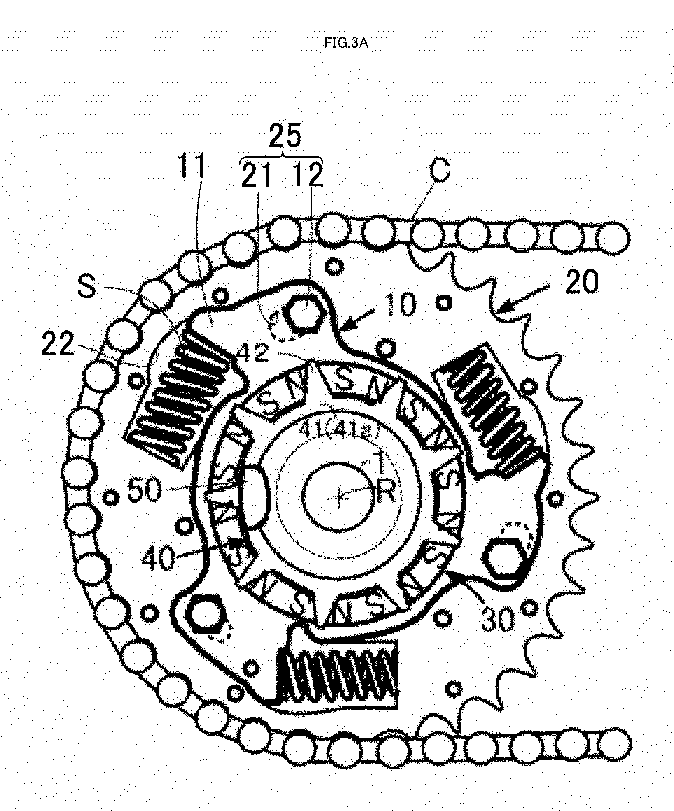

As shown in FIG. 3A, the lever member 10 serving as the first rotatable member is provided integrally with a plurality of (three) engaging portions 11 each extending radially outward of the shaft part 1. The lever member 10 is configured to rotate together with the shaft part 1 along with rotation of the pedal P. On the other hand, as shown in FIG. 1, the sprocket 20 serving as the second rotatable member is arranged coaxially with the shaft part 1 with interposition of a bearing 2 therebetween such that the sprocket 20 is rotatable relative to the lever member 10 serving as the first rotatable member.

As shown in FIG. 3A, each engaging portion 11 of the lever member 10 is provided with a projecting portion 12 that protrudes axially outward, i.e., toward the sprocket 20. Each projecting portion 12 is fitted in an arc-shaped slit 21 formed in the sprocket 20, the slit 21 extending in the circumferential direction. Along with rotational movement of the lever member 10, the projecting portion 12 slidably moves within a range of the circumferential length of the slit 21. The projecting portion 12 and the slit 21 constitute a relative rotation restriction part 25. The relative rotation restriction part 25 restricts relative rotation between the lever member 10 serving as the first rotatable member and the sprocket 20 serving as the second rotatable member. The lever member 10 and the sprocket 20 are rotatable relative to each other within an angular range of less than one rotation (360 degrees), for example.

In the sprocket 20, spring mounting holes 22 each for mounting a coil spring serving as an elastic member are formed at a plurality of (three) positions with respect to the circumferential direction. In each spring mounting hole 22, a coil spring S is mounted. One end portion of the coil spring S is engaged with one circumferential end portion of the spring mounting hole 22. The other end portion of the coil spring S is engaged with the engaging portion 11 of the lever member 10. The coil spring S biases the engaging portion 11 of the lever member 10 in the circumferential direction (in the figure, the right-turning direction or the clockwise direction). In a state where no rotational force is given to the pedal P by a user, the projecting portion 12 provided to each engaging portion 11 of the lever member 10 is in engagement with the one circumferential end of each corresponding slit 21 of the sprocket 20.

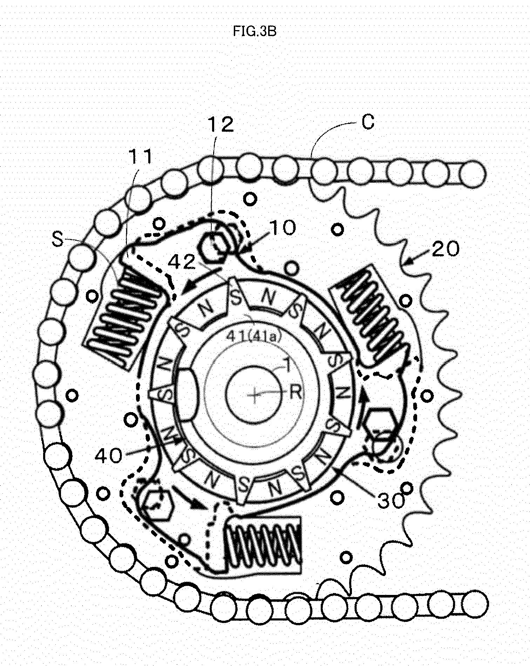

When, under the state shown in FIG. 3A, a rotational force is applied to the pedal P in the counterclockwise direction (the direction that is circumferentially opposite to the direction of a biasing force of the spring S), the shaft part 1 having the pedal P fixed thereto rotates, as shown in FIG. 3B. Along with the rotation of the shaft part 1, a rotational force is applied to the lever member 10 fixed to the shaft part 1, resulting in counterclockwise rotation of the lever member 10. Such counterclockwise rotation of the lever member 10 causes the engaging portions 11 to rotate relative to the sprocket 20 against the biasing force of the spring S mounted on the sprocket 20. At this time, the projecting portion 12 of the engaging portion 11 of the lever member 10 moves in the circumferential direction (the counterclockwise direction) through the slit 21 formed in the sprocket 20.

Upon reaching the other circumferential end portion of the slit 21, the projecting portion 12 of the engaging portion 11 of the lever member 10 is engaged with the other end portion of the slit 21. Thereafter, the sprocket 20 rotates together with the lever member 10 along with rotation of the lever member 10. Before the projecting portion 12 reaches the end portion of the slit 21, the sprocket 20 already rotates counterclockwise due to release of the biasing force of the spring S.

In this embodiment, as described above, the lever member 10 serving as the first rotatable member and the sprocket 20 serving as the second rotatable member are rotatable relative to each other within a predetermined range with respect to the circumferential direction of the shaft part 1, i.e., within a range of the circumferential length of the slit 21 formed in the sprocket 20. The range of the circumferential length is, for example, less than the range corresponding to one rotation. The relative rotational angular displacement detection device X detects a relative rotational angular displacement of the two rotatable members within this limited range of relative rotation in the circumferential direction, and thus detects a relative rotational torque of the two rotatable members. An electric motor (not shown) is controlled in such a manner that a combination of a rotational force given to the pedal P and a force of the electric motor that is outputted in accordance with the rotational force is used to control a rotational force of a wheel via a chain C wound on the sprocket 20 (see FIG. 7).

For the detection of the relative rotational angular displacement of the lever member 10 serving as the first rotatable member and the sprocket 20 serving as the second rotatable member, the relative rotational angular displacement detection device X of this embodiment includes a permanent magnet 30, a magnetic flux guiding ring 40, and a magnetic detection unit 100, as shown in FIGS. 1 to 3.

The permanent magnet 30 has an annular shape or a ring-like shape. The permanent magnet 30 is arranged with its axis coincident with the axis R of rotation, as shown in FIG. 3A. In other words, the permanent magnet 30 is arranged coaxially with the shaft part 1. The permanent magnet 30 is, for example, a bond magnet. The permanent magnet 30 has magnetic poles, i.e., N-poles and S-poles, that are arranged alternately in the circumferential direction of the shaft part 1. The N-poles arranged alternately constitute an N-pole group. The S-poles arranged alternately constitute an S-pole group. Each of the magnetic poles is magnetized in the axial direction of the shaft part 1. In this embodiment, each of the magnetic poles is magnetized in the direction parallel to the axis R of rotation. In the present invention, it is not essential that the direction of magnetization of the permanent magnet 30 is completely parallel to the axis R of rotation. It is acceptable that, for example, the direction of magnetization of the permanent magnet is inclined relative to the axis R of rotation by 45 degrees or less.

In this embodiment, nine pairs of magnetic poles (a total of 18 magnetic poles, nine S-poles and nine N-poles), which are illustrated as an example of a plurality of pairs of magnetic poles, are arranged at equal intervals in the circumferential direction. The permanent magnet 30 having a ring-like shape is arranged coaxially with the lever member 10, and fixed to the lever member 10. Accordingly, the permanent magnet 30 rotates together with rotation of the lever member 10. In the present invention, the permanent magnet 30 may not necessarily be a magnet having an annular shape or ring-like shape described above. In the present invention, it may be acceptable that the permanent magnet 30 is made up of a plurality of magnets that are arranged at equal intervals in the circumferential direction. The permanent magnet 30 may be either a sintered magnet or a bond magnet, and also may be either isotropic or anisotropic. In addition, it may be a polar anisotropic magnet.

As shown in FIGS. 1 to 3, the magnetic flux guiding ring 40 is arranged coaxially with the sprocket 20. The magnetic flux guiding ring 40 includes an annular ring body 41 and a plurality of protruding portions 42. The annular ring body 41 does not overlap the permanent magnet 30 with respect to a radial direction of the shaft part 1. That is, the annular ring body 41 does not overlap the permanent magnet 30 when seen in the axial direction of the shaft part 1. The plurality of protruding portions 42, which protrude from the outer peripheral edge of the ring body 41 in the direction radially outward of the shaft part 1, overlap the permanent magnet 30 with respect to the radial direction. Thus, the plurality of protruding portions 42 overlap the permanent magnet 30 when seen in the axial direction of the shaft part 1.

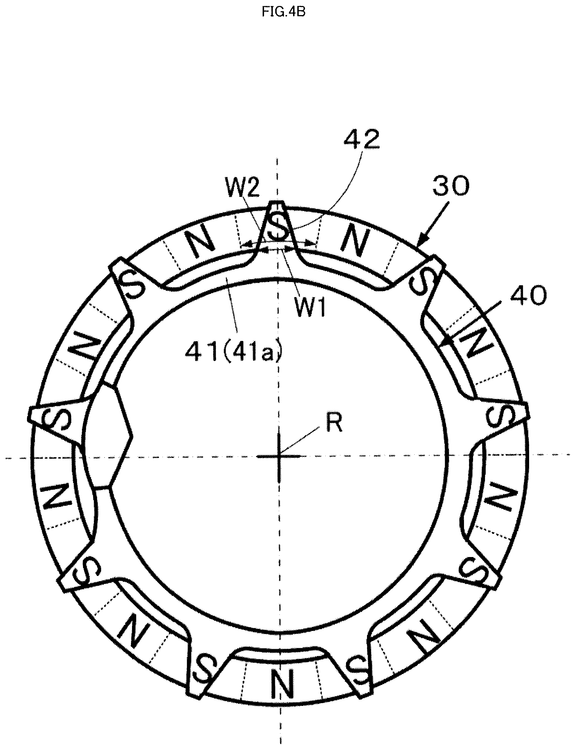

In this embodiment, the number of the plurality of protruding portions 42 is equal to the number of pairs of magnetic poles (in this embodiment, nine). In this embodiment, each of the plurality of protruding portions 42 has a circumferential width smaller than the circumferential width of each magnetic pole. More specifically, the ring body 41 of the magnetic flux guiding ring 40 includes an annular plane portion 41a extending in a direction intersecting with the direction of magnetization of the permanent magnet 30. Each protruding portion 42 of the magnetic flux guiding ring 40 is tapered into an almost triangular or trapezoidal shape with its width decreasing toward the radially outside. A circumferential width W1, which is the width of a portion of the protruding portion 42 overlapping the inner peripheral edge of the permanent magnet 30 when seen in the axial direction of the shaft part 1, is set narrower than a circumferential width W2, which is the width of the inner peripheral edge of each magnetic pole (see FIG. 4B). As shown in FIG. 1, the magnetic flux guiding ring 40 is secured to and integrated with the sprocket 20 via an attachment 23 with a space ensured between the magnetic flux guiding ring 40 and the sprocket 20 with respect to the axial direction. That is, the magnetic flux guiding ring 40 is configured to rotate together with the sprocket 20.

In this embodiment, each protruding portion 42 extends radially outward. In the present invention, however, the direction in which the protruding portions extend is not limited to the one shown in this example. It may be acceptable that the protruding portions 42 extend radially inward from the inner peripheral edge of the ring body 41. In other words, a configuration is acceptable in which the ring body 41 is arranged outside of the permanent magnet 30 having an annular shape and the protruding portions 42 extend inward from the ring body 41.

In this embodiment, the magnetic flux guiding ring 40 is prepared by a stamping process being performed on a steel plate or the like. In the present invention, however, the process for preparing the magnetic flux guiding ring is not limited to this example. The magnetic flux guiding ring 40 may be formed as a combination of a plurality of members. Additionally, although this embodiment illustrates a case where the ring body 41 and the protruding portions 42 of the magnetic flux guiding ring 40 are on the same plane, the present invention is not necessarily limited to this example. In another example, the magnetic flux guiding ring 40 may be configured such that the protruding portions 42 are bent at a predetermined angle relative to the ring body 41.

FIG. 3A shows an initial state. In the initial state, no external force is applied from the outside to the shaft part 1. In the initial state, each protruding portion 42 of the magnetic flux guiding ring 40 is positioned substantially in between the S-pole and N-pole of the permanent magnet 30. When, under this condition, an external force is applied from the outside to the shaft part 1, the lever member 10 rotates. Along with the rotation of the lever member 10, the lever member 10 rotates and displaces relative to the sprocket 20. At the same time, the projecting portion 12 provided to the engaging portion 11 of the lever member 10 moves through the slit 21 formed in the sprocket 20. At this time, the projecting portion 12 of the lever member 10 moves through the slit 21, until the projecting portion 12 is engaged with the circumferential end portion of the slit 21 so that any further relative displacement is restricted.

After the projecting portion 12 of the lever member 10 moves into engagement with the other end portion of the slit 21, every protruding portion 42 of the magnetic flux guiding ring 40 is positioned such that the area over which the protruding portion 42 overlaps one (S-pole) of the N-pole and S-pole of the permanent magnet 30 is larger, as shown in FIG. 3B. For example, after the projecting portion 12 of the lever member 10 is engaged with the other end portion of the slit 21, the lever member 10 and the sprocket 20 rotate together by 360 degrees.

The magnetic detection unit 100 is configured to detect magnetic fluxes of the ring body 41 of the magnetic flux guiding ring 40 magnetized depending on the relative position of each protruding portion 42 of the magnetic flux guiding ring 40 relative to the S-pole and N-pole of the permanent magnet 30. The magnetic detection unit 100 includes an intermediate yoke 50, a magnetic sensor 60, and a back yoke 70.

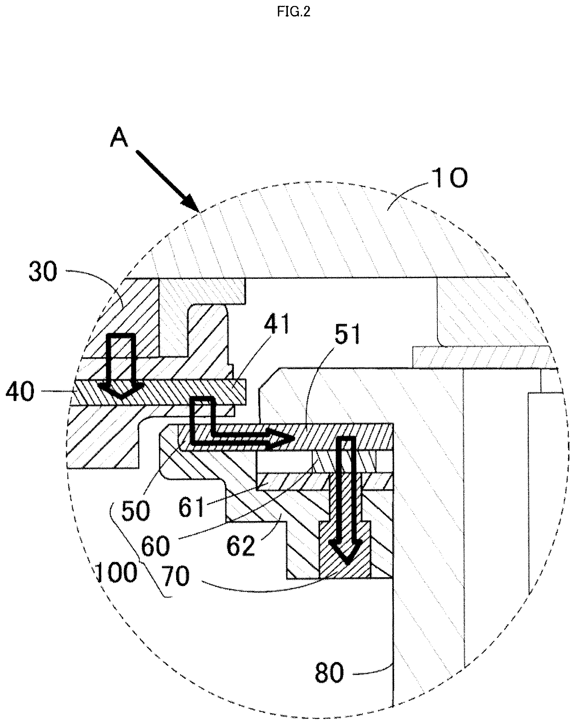

The intermediate yoke 50 includes a first plane portion 51 as shown in FIGS. 1 and 2. The first plane portion 51 is arranged such that a part (radially outward portion) of the first plane portion 51 overlaps the ring body 41 of the magnetic flux guiding ring 40 with respect to the radial direction of the axis R of rotation. In other words, the first plane portion 51 is arranged such that the part (radially outward portion) of the first plane portion 51 overlaps the ring body 41 of the magnetic flux guiding ring 40 when seen in the axial direction of the axis R of rotation. The first plane portion 51 is arranged with a gap ensured between the first plane portion 51 and the ring body 41 of the magnetic flux guiding ring 40. To be more specific, the first plane portion 51 faces the ring body 41 of the magnetic flux guiding ring 40 across the gap with respect to the axial direction of the axis R of rotation.

The intermediate yoke 50 is made of a ferromagnetic substance such as iron. The intermediate yoke 50 is provided for the purpose of collecting magnetic fluxes of the magnetic flux guiding ring 40 magnetized by the permanent magnet 30 and averaging the amplitude of the magnetic fluxes that the ring body 41 directly receives from the permanent magnet 30 irrespective of the phase of the protruding portion 42. The surface area of the first plane portion 51 of the intermediate yoke 50 is smaller than the surface area of the annular plane portion 41a of the ring body 41. The area of a surface of the first plane portion 51 and the area of a surface of the annular plane portion 41a facing each other are adopted as the surface area of the first plane portion 51 and the surface area of the annular plane portion 41a, respectively. Although this embodiment illustrates a case where the surface area of the first plane portion 51 is smaller than the surface area of the annular plane portion 41a, the present invention is not limited to this example. In the present invention, it may be acceptable that, for example, the surface area of the first plane portion 51 is equal to the surface area of the annular plane portion 41a. Alternatively, the surface area of the first plane portion 51 may be larger than the surface area of the annular plane portion 41a.

As shown in FIGS. 1 and 2, the magnetic sensor 60 overlaps the intermediate yoke 50 with respect to the radial direction of the axis R of rotation. In other words, the magnetic sensor 60 overlaps the intermediate yoke 50 when seen in the axial direction of the axis R of rotation. The magnetic sensor 60 is an element for sensing magnetic fluxes passing through the intermediate yoke 50. For example, a Hall element (Hall IC) is preferably adoptable as the magnetic sensor 60. As shown in FIG. 2, the magnetic sensor 60 is attached to a base plate 61 made of a resin, and fixed to a non-rotatable member 80 of a vehicle body via a base plate holder 62. The non-rotatable member 80 does not rotate together with the first rotatable member 10 and the second rotatable member 20.

The back yoke 70 is made of a ferromagnetic substance such as iron. The back yoke 70 is embedded in and integrated with the base plate holder 62. The back yoke 70 overlaps the magnetic sensor 60 with respect to the axial direction. In other words, the back yoke 70 overlaps the magnetic sensor 60 when seen in the axial direction of the axis R of rotation. The back yoke 70 is arranged close to the magnetic sensor 60.

In detail, the intermediate yoke 50, the magnetic sensor 60, and the back yoke 70 are provided as an integrated structure, and they overlap each other when seen in the axial direction of the axis R of rotation. At least a part of the intermediate yoke 50, at least a part of the magnetic sensor 60, and at least a part of the back yoke 70 overlap one another when seen in the axial direction of the axis R of rotation. The intermediate yoke 50, the magnetic sensor 60, and the back yoke 70 constitute a magnetic flux collecting circuit that serves as a part of a magnetic flux circuit through which the magnetic fluxes of the magnetic flux guiding ring 40 magnetized by the permanent magnet 30 pass. The magnetic flux guiding ring 40, the intermediate yoke 50, and the back yoke 70 form the magnetic flux collecting circuit. However, such a configuration that the magnetic flux path through which the magnetic fluxes of the permanent magnet 30 pass constitutes a magnetic closed loop with a low magnetic resistance throughout the entire path extending from one of the magnetic poles to the other of the magnetic poles is not positively required. In other words, the magnetic circuit is configured as if it terminates at the back yoke 70.

Adoption of such a configuration enables the relative rotational angular displacement detection device X to detect, by means of the magnetic sensor 60, a change in the magnetic fluxes passing through the area between the intermediate yoke 50 and the back yoke 70 with achievement of a very simple device structure as a whole. Note that it may be likely that component parts other than the intermediate yoke 50 and the back yoke 70, for example, a component part of the vehicle such as the shaft part 1, happen to constitute a magnetic closed loop circuit.

In this embodiment, as described above, the intermediate yoke 50, the magnetic sensor 60, and the back yoke 70 are fixed to the non-rotatable member 80 of the vehicle body independently of the lever member 10 and the sprocket 20 that are detection objects whose relative rotational movement is to be detected. The lever member 10 and the sprocket 20 are attached to the non-rotatable member 80. This achieves a further simple mounting structure. This also provides an advantageous effect of lower risk of occurrence of breakdown, because the magnetic sensor 60 is not rotated.

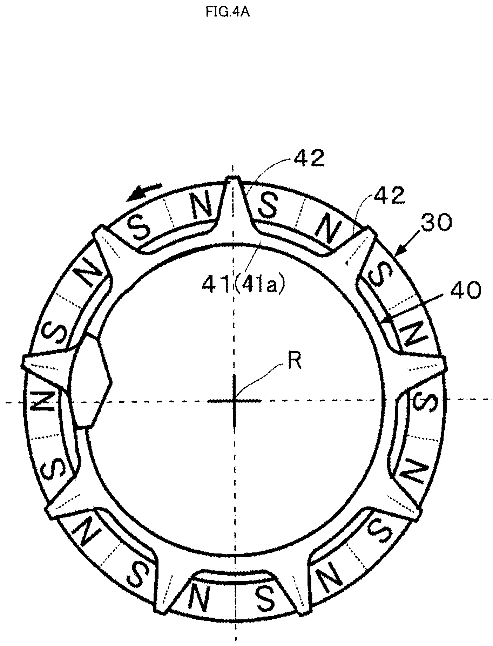

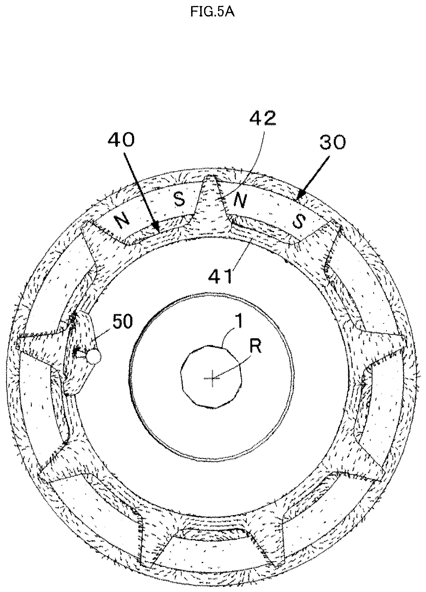

Next, the principle of the operation of the relative rotational angular displacement detection device X will be described. FIG. 4A shows an initial state in which the lever member 10 serving as the first rotatable member and the sprocket 20 serving as the second rotatable member are not rotated relative to each other (the state shown in FIG. 3A). In the initial state, each protruding portion 42 of the magnetic flux guiding ring 40 is positioned in between the magnetic poles of the permanent magnet 30, i.e., between the N-pole and S-pole. In the initial state, each protruding portion 42 constitutes a magnetic circuit between adjacent N-pole and S-pole, as shown in FIG. 5A.

The ring body 41 is arranged such that each protruding portion 42 is positioned in between the N-pole and S-pole when seen in the axial direction of the shaft part 1. The area over which the protruding portion 42 overlaps the S-pole is equal to the area over which the protruding portion 42 overlaps the N-pole. Therefore, the state is maintained in which the ring body 41 is weakly magnetized such that N-poles and S-poles alternately appear in the circumferential direction in accordance with the N-poles and S-poles of the magnet. The ring body 41 is maintained in a substantially neutral state in a magnetical sense (see FIG. 5A).

In this embodiment, as shown in FIGS. 4A and 4B, the gap between the outer peripheral edge of the ring body 41 and the inner peripheral edge of the permanent magnet 30 is narrow. As described above, the ring body 41 is weakly magnetized such that N-poles and S-poles alternately appear in the circumferential direction in accordance with the N-poles and S-poles of the magnet. Widening the gap between the outer peripheral edge of the ring body 41 and the inner peripheral edge of the permanent magnet 30 further weakens the magnetization. As a result, the accuracy of detection can be further improved.

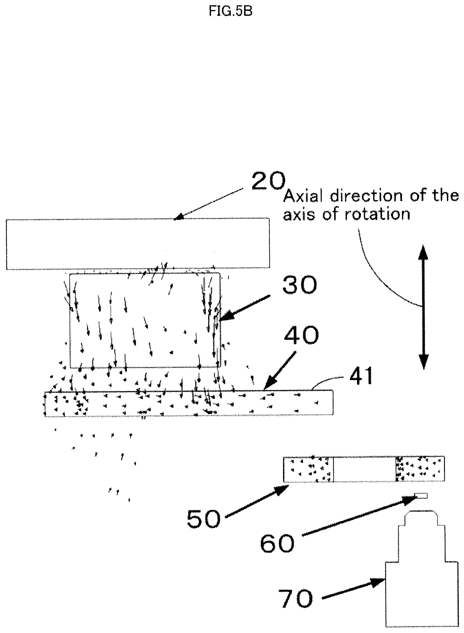

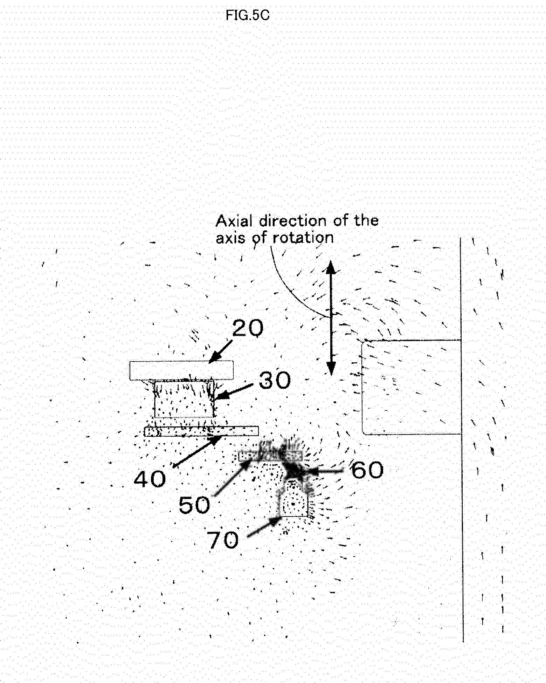

Accordingly, the initial state is a state where magnetic fluxes flow very weakly from the magnetic flux guiding ring 40 (ring body 41) to the intermediate yoke 50, or a state where almost no magnetic flux flows (see FIGS. 5B and 5C). In the initial state, magnetic fluxes of the ring body 41 weakly magnetized in the circumferential direction are collected by the intermediate yoke 50 and the back yoke 70 that are arranged adjacent to the ring body 41, and the magnetic fluxes concentratedly pass through the magnetic sensor 60 that is arranged between the intermediate yoke 50 and the back yoke 70 (see FIGS. 5B and 5C). This can ensure that the magnetic sensor 60 senses the magnetic fluxes of the ring body 41.

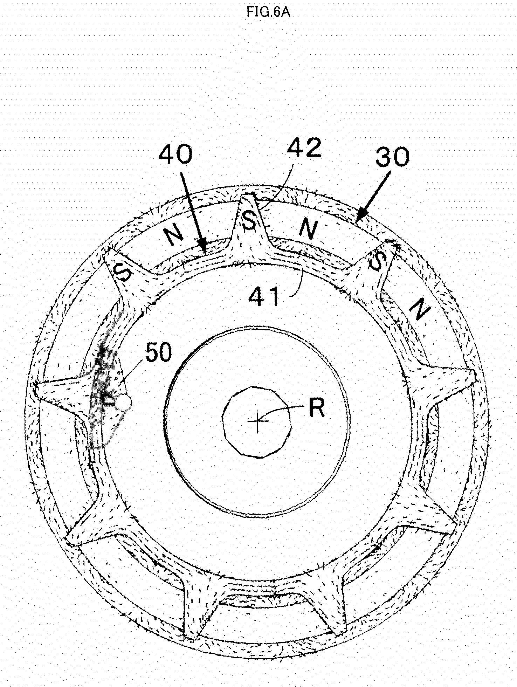

When, under this condition, the lever member 10 is rotated through a predetermined angle (in the illustrated embodiment, 10 degrees) in the counterclockwise direction, each protruding portion 42 of the magnetic flux guiding ring 40 overlaps either one of the magnetic poles (in the embodiment, the S-pole) of the permanent magnet 30 when seen in the axial direction of the axis R of rotation, as shown in FIG. 4B. Each protruding portion 42 is strongly magnetized by the magnetic pole (in the embodiment, the S-pole) of the permanent magnet 30 that overlaps the protruding portion 42 (see FIG. 6A). Consequently, the ring body 41 is magnetized throughout the circumference by the magnetic pole (in the embodiment, the S-pole) of the permanent magnet 30 that overlaps each protruding portion 42.

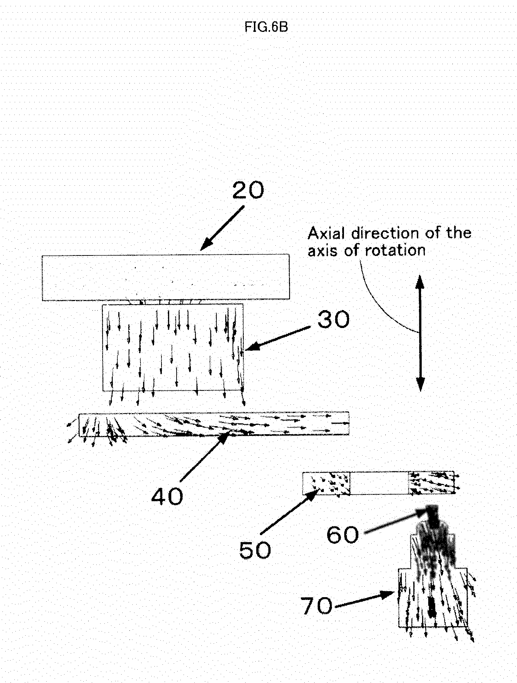

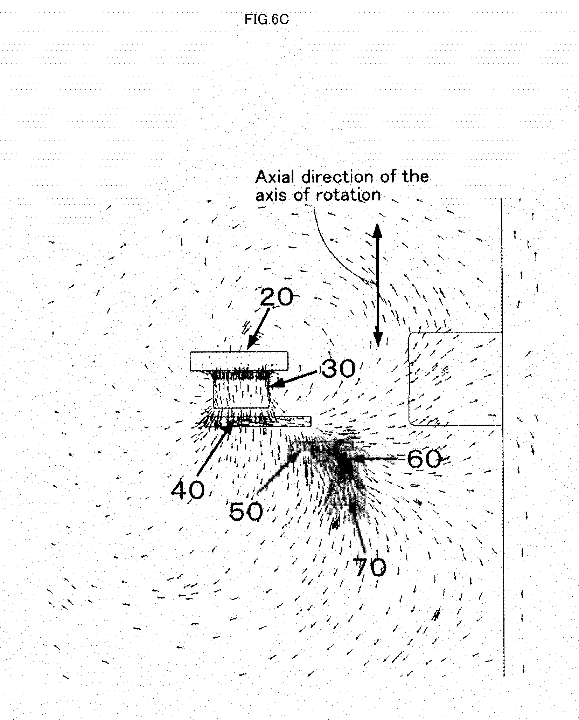

Magnetic fluxes of the magnetic flux guiding ring 40 magnetized in this manner are collected by the intermediate yoke 50 and the back yoke 70 that are arranged adjacent to the magnetic flux guiding ring 40, and the magnetic fluxes concentratedly pass through the magnetic sensor 60 that is arranged between the yokes (see FIGS. 6B and 6C). This can ensure the sensing of the magnetic fluxes of the ring body 41 magnetized into one of the magnetic poles (in the embodiment, the S-pole) along the circumferential direction.

Thus, a magnetic circuit provided in the relative rotational angular displacement detection device X of this embodiment is only a magnetic flux collecting circuit is formed by the magnetic flux guiding ring 40, the intermediate yoke 50, and the back yoke 70. Thus, the relative rotational angular displacement detection device X is able to detect a displacement of magnetic fluxes passing through the magnetic flux collecting circuit by means of the magnetic sensor 60, without positively providing a magnetic closed loop circuit. In this device, a magnetic closed loop circuit for the permanent magnet 30 is formed so as to pass through the magnetic flux guiding ring 40, the intermediate yoke 50, and the back yoke 70 as shown in FIGS. 5C and 6C, but it is not always necessary to positively provide a magnetic closed loop circuit by using members other than the aforementioned members.

The phrase "it is not always necessary to positively provide a magnetic closed loop circuit" means that positively providing a magnetic flux collecting circuit including at least the magnetic flux guiding ring 40, the intermediate yoke 50, and the back yoke 70 suffices. In other words, in the present invention, it may be likely that other component parts of the vehicle body, such as the shaft part 1 and parts located therearound, cooperate with the magnetic flux guiding ring 40, the intermediate yoke 50, and the back yoke 70, to happen to constitute a magnetic closed loop circuit. Thus, the present invention does not always need positive providing of a magnetic closed loop circuit.

As described above, the lever member 10 serving as the first rotatable member and the sprocket 20 serving as the second rotatable member are configured such that a relative rotational angle therebetween is displaceable so that the angle in the state (first state) shown in FIGS. 3A and 4A and the angle in the state (second state) shown in FIGS. 3B and 4B are different.

Comparing the state shown in FIG. 3A in which no rotational force is given and the state shown in FIG. 3B in which a rotational force exceeding the biasing force of the spring S is given, the rotational force given to the pedal P is changed. Therefore, the relative rotational angle between the lever member 10 serving as the first rotatable member and the sprocket 20 serving as the second rotatable member is changed. Along with the change, the state of magnetization of the ring body 41 of the magnetic flux guiding ring 40 shifts from the so-called magnetically neutral or almost neutral state in which the ring body 41 is weakly magnetized throughout the circumference of the ring body 41 into the state in which the ring body 41 is magnetized into the S-pole or N-pole (in the embodiment, magnetized into the S-pole) throughout the circumference.

The magnetic sensor 60 senses a change in magnetic fluxes depending on such a relative rotational angular displacement between the permanent magnet 30 and the magnetic flux guiding ring 40 which corresponds to the rotational force given to the pedal P. The relative rotational angular displacement is continuously detected in accordance with the status of the change in the magnetic fluxes thus sensed. In this embodiment, the spring S is mounted, and therefore the relative rotational angular displacement of the lever member 10 and the sprocket 20 can be detected, which leads to detection of a relative rotational torque displacement. Accordingly, the relative rotational angular displacement detection device X is able to assist a rotational force of the pedal P by controlling motorized drive means (not shown) by means of control means (not shown) based on the displacement. The position and size of the magnetic sensor 60 are set so as to enable the magnetic sensor 60 to detect, among magnetic fluxes of the annular plane portion 41a, magnetic fluxes of the annular plane portion 41a oriented in the direction of magnetization of the permanent magnet 30.

The above-described embodiment shows an illustrative example in which the lever member 10 serving as the first rotatable member is rotationally displaceable only in one direction (in the figure, the counterclockwise direction) relative to the sprocket 20 serving as the second rotatable member.

In the relative rotational angular displacement detection device X of the present invention, however, the rotational displacement may be caused in both the counterclockwise direction and the clockwise direction. In such a case, the direction of the magnetic fluxes passing through the magnetic sensor 60 changes in accordance with the direction of a relative rotational angular displacement between the rotatable members. It may be conceivable that a control circuit (not shown) controls an electric motor (not shown) serving as an auxiliary power source based on the output of the magnetic sensor 60. This can assist not only forward driving but also reverse driving in, for example, a power assist wheelchair.

The above-described embodiments illustrate an example case where the coil spring S is adopted as the elastic member, but instead, a various kinds of springs are adoptable. Alternatively, an elastic member such as a torsion bar made of any of a various kinds of resins and metals may be used to detect a relative rotational angular displacement of the first and second rotatable members, and thus a rotational torque.

As thus far described, in the embodiment of the present invention, the relative rotational angular displacement detection device includes the permanent magnet 30, the magnetic flux guiding ring 40, the intermediate yoke 50, the magnetic sensor 60, and the back yoke 70. The permanent magnet 30 is fixed to the rotatable member 10 which is one of the pair of rotatable members, and arranged such that the magnetic poles thereof magnetized in the axial direction of the shaft part 1 alternate in polarity in the circumferential direction of the shaft part 1.

The magnetic flux guiding ring 40 includes the annular ring body 41 and the plurality of protruding portions 42. The annular ring body 41 is fixed to the other of the pair of rotatable members, and arranged so as not to overlap the permanent magnet 30 when seen in the axial direction of the shaft part 1. The plurality of protruding portions 41 protrude from the ring body 41 in the radial direction of the shaft part 1, and arranged so as to overlap the permanent magnet 30 when seen in the axial direction of the shaft part 1. The number of the protruding portions is equal to the number of the pairs of magnetic poles. Each of the protruding portions has a circumferential width smaller than the circumferential width of each of the magnetic poles.

The intermediate yoke 50, which is arranged close to the ring body 41 of the magnetic flux guiding ring 40, collects magnetic fluxes of the magnetic flux guiding ring 40 magnetized depending on the relative position of each protruding portion 42 of the magnetic flux guiding ring 40 relative to each magnetic pole of the permanent magnet 30. The intermediate yoke 50 cooperates with the back yoke 70 to constitute a magnetic flux collecting circuit.

The magnetic sensor 60, which is arranged between the intermediate yoke 50 and the back yoke 70, senses magnetic fluxes passing through the magnetic flux collecting circuit constituted by the intermediate yoke 50 and the back yoke 70.

Accordingly, in the relative rotational angular displacement detection device X, a relative rotational angular displacement is surely detected with a simple structure. The magnetic sensor 60 senses magnetic fluxes passing through the magnetic flux collecting circuit constituted by the intermediate yoke 50 and the back yoke 70, without positively providing a magnetic closed loop circuit for the permanent magnet 30. This enables further simplification of the structure and simplification of manufacturing and assembling processes, thus achieving a cost reduction.

Next, a comparison between the first state (FIGS. 3A and 4A) and the second state (FIGS. 3B and 4B) will be given. The strength of magnetization of the magnetic flux guiding ring 40 in the second state is greater than the strength of magnetization of the magnetic flux guiding ring 40 in the first state.

When seen in the direction in which the protruding portions 42 and the permanent magnet 30 face each other, there are overlap regions where the protruding portions 42 overlap the permanent magnet 30, as shown in FIGS. 4A and 4B. The difference between the ratio of the area of overlap regions overlapping one (S-pole) of the poles to the area of all the overlap regions and the ratio of the area of overlap regions overlapping the other (N-pole) of the poles to the area of all the overlap regions in the first state is different from that in the second state. The difference between the ratios in the second state is greater than the difference between the ratios in the first state. For example, in FIG. 4A (an example of the first state), the difference between the ratio (about 50%) of the area of the overlap regions overlapping the S-poles and the ratio (about 50%) of the area of the overlap regions overlapping the N-poles is substantially 0%. In FIG. 4B (an example of the second state), the difference between the ratio (100%) of the area of the overlap regions overlapping the S-poles and the ratio (0%) of the area of the overlap regions overlapping the N-poles is 100%. Thus, in this embodiment, the difference (100%) between the ratios in the second state is greater than the difference (substantially 0%) between the ratios in the first state. The present invention puts no particular limitation to the ratios. The ratios shown in this embodiment are merely illustrative examples of the ratios adoptable in the present invention.

In FIG. 4A (an example of the first state), the magnetic flux guiding ring 40 is magnetized into the N-pole group and S-pole group. The protruding portions 42 are positioned relative to the magnetic poles such that the difference between the strength of magnetization of the magnetic flux guiding ring 40 magnetized by the N-pole group and the strength of magnetization of the magnetic flux guiding ring 40 magnetized by the S-pole group is small. In FIG. 4B (an example of the second state), the magnetic flux guiding ring 40 is magnetized into the S-pole group. The protruding portions 42 are positioned relative to the magnetic poles such that the difference between the strength of magnetization of the magnetic flux guiding ring 40 magnetized by the N-pole group and the strength of magnetization of the magnetic flux guiding ring 40 magnetized by the S-pole group is large.

The pair of rotatable members are configured to be rotatable relative to each other in the circumferential direction of the axis of rotation within an angular range of less than one rotation (360 degrees). One of the pair of rotatable members is biased such that it is rotatable in one direction relative to the other of the rotatable members with respect to the circumferential direction of the axis of rotation. That is, the one of the pair of rotatable members is, when a rotational force is given thereto, moved from one end (downstream in the biasing direction) to the other end (upstream in the biasing direction) of the angular range. The one of the pair of rotatable members is, for example, positioned at either one of the one end and the other end of the angular range in the first state and positioned at the other of the one end and the other end of the angular range in the second state.

In this embodiment, the magnetic detection unit includes the intermediate yoke. However, in the present invention, it is not essential that the magnetic detection unit includes the intermediate yoke. In this embodiment, for example, the magnetic sensor is arranged at an interval from the permanent magnet with respect to the axial direction of the axis of rotation. For example, the magnetic sensor is arranged at a position different from the position of the permanent magnet and does not overlap the permanent magnet with respect to the radial direction of the axis of rotation. For example, the magnetic sensor is configured to detect magnetic fluxes emitted from the permanent magnet and inputted to the magnetic sensor in the axial direction. Although this embodiment illustrates a case where all of the ring body 41, the intermediate yoke 50, and the magnetic sensor 60 are arranged at positions different from the position of the protruding portions 42 with respect to the radial direction of the axis R of rotation, this example case does not limit the present invention. In the present invention, it is preferable that at least one of the ring body 41, the intermediate yoke 50, and the magnetic sensor 60 is arranged at a position different from the position of the protruding portion 42 with respect to the radial direction of the axis R of rotation. The position different from the position of the protruding portion 42 with respect to the radial direction of the axis R of rotation is, for example, a position that does not overlap the protruding portion 42 with respect to the radial direction of the axis R of rotation. In the present invention, it may be also acceptable that all of the ring body 41, the intermediate yoke 50, and the magnetic sensor 60 are arranged at a position coincident with the position of the protruding portion 42 with respect to the radial direction of the axis R of rotation. The position coincident with the position of the protruding portion 42 with respect to the radial direction of the axis R of rotation is, for example, a position that overlaps the protruding portion 42 with respect to the radial direction of the axis R of rotation.

In this embodiment, the circumferential width of each protruding portion is smaller than the circumferential width of each magnetic pole. However, this example does not limit the present invention. In the present invention, it suffices that the circumferential width of at least one protruding portion is smaller than the circumferential width of at least one magnetic pole.

### Industrial Applicability

The relative rotational angular displacement detection device according to the present invention is preferably adopted as a relative rotational angular displacement detection device configured to detect a relative rotational angular displacement of a pair of rotatable members that are rotatable relative to each other in the circumferential direction of the axis of rotation of a power assist wheelchair, a power assist bicycle, a power steering device of an automobile, or the like. The present invention is also preferably applied to a torque detection device or a torque control device including the relative rotational angular displacement detection device. The present invention is also preferably applied to the torque control device.

### Reference Signs List

- 1: shaft part
- 2: bearing
- 10: rotatable member (lever member)
- 11: engaging portion
- 12: projecting portion
- 20: rotatable member (sprocket)
- 21: slit
- 22: spring mounting hole
- 23: attachment
- 25: relative rotation restriction part
- 30: permanent magnet
- 40: magnetic flux guiding ring
- 41: ring body
- 41a: plane portion
- 42: protruding portion
- 50: intermediate yoke
- 51: first plane portion
- 60: magnetic sensor
- 61: base plate
- 62: base plate holder
- 70: back yoke
- 80: non-rotatable member
- 100: magnetic detection unit
- C: chain
- P: pedal
- R: axis of rotation
- S: coil spring
- X: relative rotational angular displacement detection device

## Claims

1. A relative rotational angular displacement detection device, comprising:
a pair of rotatable members (10,20) rotatable relative to each other about an axis (R) of rotation in a circumferential direction;
a permanent magnet (30) attached to one of the pair of rotatable members (10,20) and including magnetic poles (S,N) magnetized in an axial direction of the axis (R) of rotation, the magnetic poles (S,N) being arranged so as to alternate in polarity in the circumferential direction, the magnetic poles (S,N) each having a circumferential width (W2);
a magnetic flux guiding ring (40) attached to the other of the pair of rotatable members (10,20), said magnetic flux guiding ring (40) including a plurality of protruding portions (42) and an annular ring body (41),
the annular ring body (41) being attached to the other of the pair of rotatable members (10,20) and arranged coaxially with the axis (R) of rotation, the annular ring body (41) being magnetized with the strength of magnetization changing depending on positions of the protruding portions (42) relative to positions of the magnetic poles (S,N),
the plurality of protruding portions (42) protruding from the ring body (41) in either radial directions and being arranged so as to overlap the permanent magnet (30) when seen in the axial direction, the plurality of protruding portions (42) each having a circumferential width (W1), each of the circumferential widths (W1) of the protruding portions (42) being smaller than each of the circumferential widths (W2) of the magnetic poles (S,N),
the width (W1) of the protruding portions (42) being equal to the overlapping of the protruding portion (42) and the permanent magnet (30) at the inner peripheral edge of the permanent magnet (30), and the width (W2) of the magnetic poles (S,N) being equal to the inner peripheral edge of the permanent magnet (30) in the case of the protruding portion protruding outwards, or
the width (W1) of the protruding portions (42) being equal to the overlapping of the protruding portion (42) and the permanent magnet (30) at the outer peripheral edge of the permanent magnet (30) and the width (W2) of the magnetic poles (S,N) being equal to the outer peripheral edge of the permanent magnet (30) in the case of the protruding portion protruding inwards,
wherein the annular ring body (41) of the magnetic flux guiding ring (40) includes an annular plane portion (41 a) that extends in a direction intersecting with a direction of magnetization of the permanent magnet (30); and
whereby the relative rotational angular displacement detection device further comprises:
a magnetic detection unit (100) configured to detect magnetic fluxes of the annular plane portion (41 a) of the annular ring body (41) of the magnetic flux guiding ring (40),
**characterized in that** the magnetic detection unit (100) includes:
an intermediate yoke (50) having a first plane portion (51), the first plane portion (51) is arranged between the magnetic sensor (60) and the annular ring body (41), and arranged so as to face a single face of the annular plane portion (41 a) of the annular ring body (41) with a gap therebetween with respect to the direction of magnetization of the permanent magnet (30);
a magnetic sensor (60) for detecting magnetic fluxes overlapping the intermediate yoke (50) in the axial direction of the axis (R) of rotation, whereby the magnetic sensor (60) is a sensor configured to detect, among magnetic fluxes of the annular plane portion (41 a), magnetic fluxes oriented in the direction of magnetization of the permanent magnet (30), wherein at least one of the annular ring body (41) of the magnetic flux guiding ring (40) and the magnetic sensor (60) is arranged at a position different from the position of the protruding portions (42) of the magnetic flux guiding ring (40) with respect to the axial direction of the axis (R) of rotation;
a back yoke (70) overlapping the magnetic sensor (60) in the axial direction of axis (R) of rotation.

2. A relative rotational angular displacement detection device according to claim 1, **characterized in that** the surface area of the first plane portion (51) of the intermediate yoke (50) is smaller than the surface area of the annular plane portion (41 a) of the annular ring body (41).

3. A relative rotational angular displacement detection device according to claim 1 or 2, **characterized in that** at least any one of the annular ring body (41), the intermediate yoke (50), and the magnetic sensor (60) is arranged at a position different from the position of the protruding portion with respect to a radial direction of the axis (R) of rotation.

4. A relative rotational angular displacement detection device according to any one of claims 1 to 3, **characterized in that** the magnetic poles form an N-pole group and an S-pole group,
the magnetic flux guiding ring (40) has a first state in which the strength of magnetization is relatively low and a second state in which the strength of magnetization is relatively high,
in the first state, the protruding portions (42) are positioned relative to the magnetic poles such that the difference between the strength of magnetization of the magnetic flux guiding ring (40) magnetized by the N-pole group and the strength of magnetization of the magnetic flux guiding ring (40) magnetized by the S-pole group is small,
in the second state, the protruding portions (42) are positioned relative to the magnetic poles such that the difference between the strength of magnetization of the magnetic flux guiding ring (40) magnetized by the N-pole group and the strength of magnetization of the magnetic flux guiding ring (40) magnetized by the S-pole group is large.

5. A relative rotational angular displacement detection device according to claim 4, **characterized in that** in the first state, the protruding portions (42) are positioned relative to the magnetic poles such that the magnetic flux guiding ring (40) is magnetized substantially equally by the N-pole group and the S-pole group,
in the second state, the protruding portions (42) are positioned relative to the magnetic poles such that the magnetic flux guiding ring (40) is magnetized by substantially only one of the N-pole group and the S-pole group.

6. A torque detection device comprising:
the relative rotational angular displacement detection device according to any one of claims 1 to 5; and
an elastic member (S) arranged between the pair of rotatable members (10,20), the elastic member (S) configured to constantly apply a biasing force in a relative rotation direction to the pair of rotatable members (10,20), wherein
the pair of rotatable members (10,20) are provided with a relative rotation restriction part (25),
the relative rotation restriction part (25) is configured to prevent rotation of the rotatable members relative to each other after either one of the pair of rotatable members (10,20) is rotated relative to the other of the rotatable members through a predetermined rotational angle against the biasing force of the elastic member (S).

7. A torque control device comprising:
the relative rotational angular displacement detection device according to any one of claims 1 to 5;
a rotary driving member connected to either one of the pair of rotatable members (10,20), the rotary driving member configured such that a user gives a rotational force thereto; a power source configured to give a rotational force to the other of the rotatable members; and
a control unit configured to, when the one rotatable member is rotated relative to the other rotatable member through a predetermined rotational angle, control the rotational force that the power source gives to the other rotatable member depending on an output of the magnetic detection unit (100).

8. A power assist wheelchair comprising the torque control device according to claim 7.

9. A power assist straddle-type vehicle comprising the torque control device according to claim 7.

10. A power steering device comprising the torque control device according to claim 7.

## Patentansprüche

1. Eine Relativ-Dreh-Winkel-Verlagerungs-Erfassungsvorrichtung, die umfasst:
ein Paar von drehbaren Elementen (10, 20), die relativ zueinander, um eine Achse (R) der Drehung, in einer Umfangsrichtung drehbar sind;
einen Permanent-Magnet (30), der an einem von dem Paar von drehbaren Elementen (10, 20) angebracht ist, und Magnet-Pole (S,N) beinhaltet, die in eine Axial-Richtung der Achse (R) der Drehung magnetisiert sind, die Magnet-Pole (S,N) sind angeordnet, sodass sie in Polarität in der Umfangsrichtung abwechseln, jeder der Magnet-Pole (S,N) hat eine Umfangs-Breite (W2);
einen Magnet-Fluss-Führungs-Ring (40), der an dem anderen von dem Paar von drehbaren Elementen (10, 20) angebracht ist, dieser Magnet-Fluss-Führungs-Ring (40) beinhaltet eine Mehrzahl von Vorsprungs-Abschnitten (42) und einen Kreis-Ring-Körper (41),
der Kreis-Ring-Körper (41) ist an dem anderen von dem Paar von drehbaren Elementen (10, 20) angebracht und koaxial mit der Achse (R) der Drehung angeordnet, der Kreis-Ring-Körper (41) ist mit einer Kraft der Magnetisierung magnetisiert, die sich abhängig von Positionen der Vorsprungs-Abschnitte (42) relativ zu Positionen der Magnet-Pole (S,N) ändert,
die Mehrzahl von Vorsprungs-Abschnitten (42) stehen von dem Ring-Körper (41) in jeder Radial-Richtung vor und sind angeordnet, sodass diese den Permanent-Magnet (30) überlappen, wenn in der Axial-Richtung betrachtet, die Mehrzahl von Vorsprungs-Abschnitten (42) haben jede eine Umfangs-Breite (W1), jede von den Umfangs-Breiten (W1) der Vorsprungs-Abschnitte (42) ist kleiner als jede von den Umfangs-Breiten (W2) der Magnet-Pole (S,N),
die Breite (W1) der Vorsprungs-Abschnitte (42) ist gleich mit der Überlappung des Vorsprungs-Abschnitts (42) und des Permanent-Magnet (30) an der inneren Umfangskante des Permanent-Magnet (30), und die Breite (W2) der Magnet-Pole (S,N) ist gleich mit der inneren Umfangskante des Permanent-Magnet (30) in dem Fall, in dem der Vorsprungs-Abschnitt nach außen vorsteht, oder
die Breite (W1) der Vorsprungs-Abschnitte (42) ist gleich mit der Überlappung des Vorsprungs-Abschnitts (42) und des Permanent-Magnet (30) an der äußeren Umfangskante des Permanent-Magnet (30) und die Breite (W2) der Magnet-Pole (S,N) ist gleich mit der äußeren Umfangskante des Permanent-Magnet (30) in dem Fall, in dem der Vorsprungs-Abschnitt nach innen vorsteht,
wobei der Kreis-Ring-Körper (41) des Magnet-Fluss-Führungs-Rings (40) einen RingEbene-Abschnitt (41 a) beinhaltet, der sich in eine Richtung erstreckt, die sich mit einer Richtung der Magnetisierung des Permanent-Magnet (30) schneidet; und
wobei die Relativ-Dreh-Winkel-Verlagerungs-Erfassungsvorrichtung weiterhin umfasst:
eine Magnet-Erfassungseinheit (100), die konfiguriert ist um Magnet-Flüsse des RingEbene-Abschnitts (41 a) des Kreis-Ring-Körpers (41) des Magnet-Fluss-Führungs-Rings (40) zu erfassen,
**dadurch gekennzeichnet, dass** die Magnet-Erfassungseinheit (100) beinhaltet:
ein Zwischen-Joch (50), das einen ersten Ebene-Abschnitt (51) hat, der erste Ebene-Abschnitt (51) ist zwischen dem Magnet-Sensor (60) und dem Kreis-Ring-Körper (41) angeordnet, und ist angeordnet, sodass dieser einer einzelnen Fläche des RingEbene-Abschnitts (41a) des Kreis-Ring-Körpers (41) zugewandt ist, mit einem Spalt dazwischen mit Bezug auf die Richtung der Magnetisierung des Permanent-Magnet (30);
einen Magnet-Sensor (60) zum Erfassen der Magnet-Flüsse, welche das Zwischen-Joch (50) in der Axial-Richtung der Achse (R) der Drehung überlappen, wobei der Magnet-Sensor (60) ein Sensor ist, konfiguriert um von Magnet-Flüssen des RingEbene-Abschnitts (41a) die Magnet-Flüsse zu erfassen, die in die Richtung der Magnetisierung des Permanent-Magnet (30) orientiert sind, wobei zumindest einer von dem Kreis-Ring-Körper (41) des Magnet-Fluss-Führungs-Rings (40) und des Magnet-Sensors (30) an einer Position angeordnet ist, unterschiedlich von der Position der Vorsprungs-Abschnitte (42) des Magnet-Fluss-Führungs-Rings (40) mit Bezug auf die Axial-Richtung der Achse (R) der Drehung;
ein Rück-Joch (70), welches den Magnet-Sensor (60) in der Axial-Richtung der Achse (R) der Drehung überlappt.

2. Eine Relativ-Dreh-Winkel-Verlagerungs-Erfassungsvorrichtung gemäß Anspruch 1, **dadurch gekennzeichnet, dass** der Flächen-Bereich des ersten Ebene-Abschnitts (51) des Zwischen-Jochs (50) kleiner ist als der Flächen-Bereich des Ring-Ebene-Abschnitts (41 a) des Kreis-Ring-Körpers (41).

3. Eine Relativ-Dreh-Winkel-Verlagerungs-Erfassungsvorrichtung gemäß Anspruch 1 oder 2, **dadurch gekennzeichnet, dass** zumindest einer von dem Kreis-Ring-Körper (41), dem Zwischen-Joch (50) und dem Magnet-Sensor (60) an einer Position unterschiedlich von der Position des Vorsprungs-Abschnitts mit Bezug auf eine Radial-Richtung der Achse (R) der Drehung angeordnet ist.

4. Eine Relativ-Dreh-Winkel-Verlagerungs-Erfassungsvorrichtung gemäß irgendeinem der Ansprüche 1 bis 3, **dadurch gekennzeichnet, dass** die Magnet-Pole eine N-Pol-Gruppe und eine S-Pol-Gruppe bilden,
der Magnet-Fluss-Führungs-Ring (40) hat einen ersten Zustand, in dem die Kraft der Magnetisierung relativ niedrig ist, und einen Zweitzustand, in dem die Kraft der Magnetisierung relativ hoch ist,
in dem ersten Zustand sind die Vorsprungs-Abschnitte (42) relativ zu den Magnet-Polen positioniert, sodass der Unterschied zwischen der Kraft der Magnetisierung des Magnet-Fluss-Führungs-Rings (40), der durch die N-Pol-Gruppe magnetisiert ist, und der Kraft der Magnetisierung des Magnet-Fluss-Führungs-Rings (40), der durch die S-Pol-Gruppe magnetisiert ist, klein ist,
in dem zweiten Zustand sind die Vorsprungs-Abschnitte (42) relativ zu den Magnet-Polen positioniert, sodass der Unterschied zwischen der Kraft der Magnetisierung des Magnet-Fluss-Führungs-Rings (40), der durch die N-Pol-Gruppe magnetisiert ist, und der Kraft der Magnetisierung des Magnet-Fluss-Führungs-Rings (40), der durch die S-Pol-Gruppe magnetisiert ist, groß ist.

5. Eine Relativ-Dreh-Winkel-Verlagerungs-Erfassungsvorrichtung gemäß Anspruch 4, **dadurch gekennzeichnet, dass** in dem ersten Zustand die Vorsprungs-Abschnitte relativ zu den Magnet-Polen positioniert sind, sodass der Magnet-Fluss-Führungs-Ring (40) im Wesentlichen gleich durch die N-Pol-Gruppe und die S-Pol-Gruppe magnetisiert ist,
in dem zweiten Zustand sind die Vorsprungs-Abschnitte (42) relativ zu den Magnet-Polen positioniert, sodass der Magnet-Fluss-Führungs-Ring (40) durch im Wesentlichen nur eine von der N-Pol-Gruppe und der S-Pol-Gruppe magnetisiert ist.

6. Eine Drehmoment-Erfassungsvorrichtung, die umfasst:
die Relativ-Dreh-Winkel-Verlagerungs-Erfassungsvorrichtung gemäß irgendeinem der Ansprüche 1 bis 5; und
ein elastisches Element (S), das zwischen dem Paar von drehbaren Elementen (10, 20) angeordnet ist, das elastische Element (S) ist konfiguriert um konstant eine Drück-Kraft in eine Relativ-Dreh-Richtung des Paars von drehbaren Elementen (10, 20) aufzubringen, wobei
das Paar von drehbaren Elementen (10, 20) mit einem Relativ-Dreh-Beschränkungsteil (25) vorgesehen ist,
der Relativ-Dreh-Beschränkungsteil (25) ist konfiguriert, um Drehung der drehbaren Elemente relativ zueinander zu verhindern, wenn eines von dem Paar von drehbaren Elementen (10; 20) relativ zu dem anderen von drehbaren Elementen um einen vorgegebenen Dreh-Winkel, gegen die Drück-Kraft des elastischen Elements (S), gedreht ist.

7. Eine Drehmoment-Steuervorrichtung, die umfasst:
die Relativ-Dreh-Winkel-Verlagerungs-Erfassungsvorrichtung gemäß irgendeinem der Ansprüche 1 bis 5;
ein Dreh-Antriebselement, das mit einem vom dem Paar von drehbaren Elementen (10, 20) verbunden ist, das Dreh-Antriebselement ist konfiguriert, sodass ein Bediener eine Dreh-Kraft darauf aufgibt;
eine Energiequelle, die konfiguriert ist um eine Dreh-Kraft zu dem anderen von den drehbaren Elementen aufzugeben; und
eine Steuereinheit, die konfiguriert ist um, wenn das eine drehbare Element relativ zu dem anderen drehbaren Element durch einen vorgegebenen Dreh-Winkel gedreht ist, die Dreh-Kraft zu steuern, sodass die Energiequelle auf das andere drehbare Element in Abhängigkeit von einer Abgabe der Magnet-Erfassungseinheit (100) aufgibt.

8. Ein energie-unterstützter Rollstuhl umfasst die Drehmoment-Steuervorrichtung gemäß Anspruch 7.

9. Ein energie-unterstütztes Spreiz-Sitz-Typ-Fahrzeug umfasst die Drehmoment-Steuervorrichtung gemäß Anspruch 7.

10. Eine Lenk-Kraft-Unterstützungsvorrichtung umfasst die Drehmoment-Steuervorrichtung gemäß Anspruch 7.

## Revendications

1. Dispositif de détection de déplacement angulaire par rotation relative, comprenant :
une paire d'éléments rotatifs (10, 20) qui tournent les uns par rapport aux autres autour d'un axe de rotation (R) en direction circonférentielle ;
un aimant permanent (30) attaché à un élément de la paire d'éléments rotatifs (10, 20) et incluant des pôles magnétiques (S, N) magnétisés en direction axiale de l'axe de rotation (R), les pôles magnétiques (S, N) étant agencés de manière à alterner la polarité en direction circonférentielle, les pôles magnétiques (S, N) présentant chacun une largeur circonférentielle (W2) ;
une bague de guidage de flux magnétique (40) attachée à l'autre élément de la paire d'éléments rotatifs (10, 20), ladite bague de guidage de flux magnétique (40) incluant une pluralité de portions saillantes (42) et un corps de bague annulaire (41),
le corps de bague annulaire (41) étant attaché à l'autre élément de la paire d'éléments rotatifs (10, 20) et agencé coaxialement à l'axe de rotation (R), le corps de bague annulaire (41) étant magnétisé avec une force de magnétisation qui change en fonction de positions des portions saillantes (42) par rapport à des positions des pôles magnétiques (S, N),
les portions de la pluralité de portions saillantes (42) ressortant du corps de bague (41) dans une des directions radiales et étant agencées de manière à chevaucher l'aimant permanent (30) vu en direction axiale, les portions de la pluralité de portions saillantes (42) ayant chacune une largeur circonférentielle (W1), chacune des largeurs circonférentielles (W1) des portions saillantes (42) étant inférieure à chacune des largeurs circonférentielles (W2) des pôles magnétiques (S, N),
la largeur (W1) des portions saillantes (42) étant égale au chevauchement de la portion saillante (42) et de l'aimant permanent (30) sur le bord périphérique interne de l'aimant permanent (30), et la largeur (W2) des pôles magnétiques (S, N) étant égale au bord périphérique interne de l'aimant permanent (30) dans le cas où la portion saillante ressort vers l'extérieur, ou
la largeur (W1) des portions saillantes (42) étant égale au chevauchement de la portion saillante (42) et de l'aimant permanent (30) sur le bord périphérique externe de l'aimant permanent (30) et la largeur (W2) des pôles magnétiques (S, N) étant égale au bord périphérique externe de l'aimant permanent (30) dans le cas où la portion saillante ressort vers l'intérieur,
dans lequel le corps de bague annulaire (41) de la bague de guidage de flux magnétique (40) inclut une portion de plan annulaire (41a) qui s'étend dans une direction qui intersecte une direction de magnétisation de l'aimant permanent (30) ; et
moyennant quoi le dispositif de détection de déplacement angulaire par rotation relative comprend en outre :
une unité de détection magnétique (100) configurée pour détecter des flux magnétiques de la portion de plan annulaire (41a) du corps de bague annulaire (41) de la bague de guidage de flux magnétique (40),
**caractérisé en ce que** l'unité de détection magnétique (100) inclut :
un étrier intermédiaire (50) ayant une première portion de plan (51), la première portion de plan (51) étant agencée entre le capteur magnétique (60) et le corps de bague annulaire (41), et agencée de manière à faire face à une face unique de la portion de plan annulaire (41a) du corps de bague annulaire (41) avec un intervalle entre elles par rapport à la direction de magnétisation de l'aimant permanent (30) ;
un capteur magnétique (60) pour détecter des flux magnétiques qui chevauchent l'étrier intermédiaire (50) en direction axiale de l'axe de rotation (R), moyennant quoi le capteur magnétique (60) est un capteur configuré pour détecter, parmi des flux magnétiques de la portion de plan annulaire (41a), des flux magnétiques orientés en direction de magnétisation de l'aimant permanent (30), dans lequel au moins un élément parmi le corps de bague annulaire (41) de la bague de guidage de flux magnétique (40) et le capteur magnétique (60) est agencé à une position différente de la position des portions saillantes (42) de la bague de guidage de flux magnétique (40) par rapport à la direction axiale de l'axe de rotation (R) ;
un étrier arrière (70) chevauchant le capteur magnétique (60) en direction axiale de l'axe de rotation (R).

2. Dispositif de détection de déplacement angulaire par rotation relative selon la revendication 1, **caractérisé en ce que** la surface de la première portion de plan (51) de l'étrier intermédiaire (50) est inférieure à la surface de la portion de plan annulaire (41a) du corps de bague annulaire (41).

3. Dispositif de détection de déplacement angulaire par rotation relative selon la revendication 1 ou 2, **caractérisé en ce que** au moins un élément parmi le corps de bague annulaire (41), l'étrier intermédiaire (50) et le capteur magnétique (60) est agencé à une position différente de la position de la portion saillante par rapport à une direction radiale de l'axe de rotation (R).

4. Dispositif de détection de déplacement angulaire par rotation relative selon l'une quelconque des revendications 1 à 3, **caractérisé en ce que**
les pôles magnétiques forment un groupe de pôle N et un groupe de pôle S,
la bague de guidage de flux magnétique (40) présente un premier état dans lequel la force de magnétisation est relativement basse et un deuxième état dans lequel la force de magnétisation est relativement élevée,
dans le premier état, les portions saillantes (42) sont positionnées par rapport aux pôles magnétiques de telle sorte que la différence entre la force de magnétisation de la bague de guidage de flux magnétique (40) magnétisée par le groupe de pôle N et la force de magnétisation de la bague de guidage de flux magnétique (40) magnétisée par le groupe de pôle S est faible,
dans le deuxième état, les portions saillantes (42) sont positionnées par rapport aux pôles magnétiques de telle sorte que la différence entre la force de magnétisation de la bague de guidage de flux magnétique (40) magnétisée par le groupe de pôle N et la force de magnétisation de la bague de guidage de flux magnétique (40) magnétisée par le groupe de pôle S est forte.

5. Dispositif de détection de déplacement angulaire par rotation relative selon la revendication 4, **caractérisé en ce que**
dans le premier état, les portions saillantes (42) sont positionnées par rapport aux pôles magnétiques de telle sorte que la bague de guidage de flux magnétique (40) est magnétisée de manière substantiellement égale par le groupe de pôle N et par le groupe de pôle S,
dans le deuxième état, les portions saillantes (42) sont positionnées par rapport aux pôles magnétiques de telle sorte que la bague de guidage de flux magnétique (40) est magnétisée substantiellement par un seul groupe parmi le groupe de pôle N et le groupe de pôle S.

6. Dispositif de détection de couple comprenant :
le dispositif de détection de déplacement angulaire par rotation relative selon l'une quelconque des revendications 1 à 5 ; et
un élément élastique (S) agencé entre la paire d'éléments rotatifs (10, 20), l'élément élastique (S) étant configuré pour appliquer de manière constante, dans une direction de rotation relative, une force de poussée à la paire d'éléments rotatifs (10, 20), dans lequel
la paire d'éléments rotatifs (10, 20) est pourvue d'une partie de restriction de rotation relative (25),
la partie de restriction de rotation relative (25) est configurée pour éviter la rotation relative des éléments rotatifs après que l'un des éléments de la paire d'éléments rotatifs (10, 20) est déplacé en rotation par rapport à l'autre desdits éléments rotatifs sur un angle de rotation prédéterminé contre la force de poussée de l'élément élastique (S).

7. Dispositif de contrôle de couple comprenant :
le dispositif de détection de déplacement angulaire par rotation relative selon l'une quelconque des revendications 1 à 5 ;
un élément d'entraînement rotatif connecté à l'un des éléments de la paire d'éléments rotatifs (10, 20), l'élément d'entraînement rotatif étant configuré de telle sorte qu'un utilisateur lui transmette une force de rotation ;
une source d'alimentation configurée pour procurer une force de rotation de l'autre élément desdits éléments rotatifs ; et
une unité de contrôle configurée pour contrôler, quand ledit élément rotatif est tourné par rapport à l'autre élément rotatif sur un angle de rotation prédéterminé, la force de rotation que la source d'alimentation transmet à l'autre élément rotatif en fonction d'une sortie de l'unité de détection magnétique (100).

8. Fauteuil roulant motorisé comprenant le dispositif de contrôle de couple selon la revendication 7.

9. Véhicule à enfourcher motorisé comprenant le dispositif de contrôle de couple selon la revendication 7.

10. Dispositif de direction assistée comprenant le dispositif de contrôle de couple selon la revendication 7.
